(19) Europäisches Patentamt

European Patent Office

Office européen des brevets

(11) **EP 4 438 461 A1**

(12) **EUROPEAN PATENT APPLICATION**

(43) Date of publication:
**02.10.2024 Bulletin 2024/40**

(21) Application number: **23164764.5**

(22) Date of filing: **28.03.2023**

(51) International Patent Classification (IPC):
**B63B 79/40** (2020.01)  **B63H 5/125** (2006.01)
**B63H 21/21** (2006.01)  **B63H 25/42** (2006.01)
**G05D 1/08** (2006.01)  **G05F 1/10** (2006.01)
**H02J 3/14** (2006.01)  **G05B 13/02** (2006.01)

(52) Cooperative Patent Classification (CPC):
**B63H 25/42; G05D 1/0875;** B63H 5/125;
B63H 21/21; B63H 23/24

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **ABB SCHWEIZ AG
5400 Baden (CH)**

(72) Inventors:
- **LUNDH, Michael
  723 49 Västerås (SE)**
- **LINDER, Jonas
  464 93 Mellerud (SE)**
- **FEYZMAHDAVIAN, Hamid
  169 73 Stockholm (SE)**

(74) Representative: **Kransell & Wennborg KB
P.O. Box 27834
115 93 Stockholm (SE)**

(54) **FEASIBLE FORCES AND TORQUE OF A VESSEL**

(57) A feasible force determining device provides, for each propulsion machine of a vessel, a first set of allowable control signals of a first type with values between a minimum and a maximum value, calculates, for each allowable control signal of each propulsion machine, a vector contribution of the propulsion machine to a set of feasible forces and torques being related to at least one type of motion of the vessel, adds, for each propulsion machine, each calculated vector to all vectors in the set of feasible forces and torques, forms a vessel operations space for the operation of the vessel, which vessel operations space is based on the set of feasible forces and torques and provided in at least one dimension, and applies (S210) the vessel operations space in the operation of the vessel.

```
┌─────────────────────────────────────────────┐
│                     S200                       │
│   Form vessel operations space using vector    │
│    contributions of each propulsion machine    │
└─────────────────────────────────────────────┘
                        │
                        ▼
┌─────────────────────────────────────────────┐
│                     S210                       │
│            Apply in operation of vessel        │
└─────────────────────────────────────────────┘
```

Fig. 8

**Description**

TECHNICAL FIELD

The invention relates to a method of determining feasible forces and feasible torque for a vessel, a feasible force determining device as well as a vessel comprising a feasible force determining device.

BACKGROUND

A vessel may be operated automatically using a vessel control device or manually using a vessel steering device, such as a steering wheel or a joystick. In such operation, propulsion machines, such as thrusters, may be used.

In such operation, it may additionally be of interest that the operation is kept within possible physical limits of the propulsion machines.

In the Master Thesis "Nonlinear MPC for Motion Control and Thruster Allocation of Ships", 2019, by Alexander Bärlund, Linköping University, Department of Electrical Engineering, Automation Control, there is a discussion about simple limits that can be fed back to a vessel control device that employs model predictive control (MPC).

There is room for improvement in the use and provision of such limitations, especially with regard to how the propulsion machines operate. Aspects of the present disclosure are directed towards improving such physical limits used in the operation of a vessel.

SUMMARY

One object of the invention is therefore to improve the utilization of the control system to stay within the physical limits during the operation of a vessel.

This object is according to a first aspect achieved through a method for determining feasible forces and feasible torque for a vessel provided with a group of propulsion machines, the propulsion machines being configured to propel the vessel in a number of directions, the method being performed by a feasible force determining device and comprising:

    providing, for each propulsion machine, a first set of a first type of allowable motion control signals with values between a minimum and a maximum value,
    calculating, for each allowable motion control signal of each propulsion machine, a vector contribution of the propulsion machine to a set of feasible forces and torques being related to at least one type of motion of the vessel,
    add, for each propulsion machine, each calculated vector to all vectors in the set of feasible forces and torques,
    forming a vessel operations space for the operation of the vessel, which vessel operations space is based on the set of feasible forces and torques and provided in at least one dimension, and
    applying the vessel operations space in the operation of the vessel.

The object is according to a second aspect achieved through a feasible force determining device for determining feasible forces and feasible torque for a vessel provided with a group of propulsion machines, the propulsion machines being configured to propel the vessel in a number of directions, the feasibility force determining device comprising a processor operative to:

    provide, for each propulsion machine, a first set with a first type of allowable control signals with values between a minimum and a maximum value,
    calculate, for each allowable control signal of each propulsion machine, a vector contribution of the propulsion machine to a set of feasible forces and torques being related to at least one type of motion of the vessel,
    add, for each propulsion machine, each calculated vector to all vectors in the set of feasible forces and torques,
    form a vessel operations space for the operation of the vessel, which vessel operations space is based on the set of feasible forces and torques and provided in at least one dimension, and
    apply the vessel operations space in the operation of the vessel.

The object is according to a third aspect achieved through a vessel comprising the feasible force determining device according to the second aspect.

A motion control signal is a signal that controls the motion of the first vessel.

A set of forces and torques may be a set of forces and torques operating on a centre of gravity of the vessel or any other point.

The vessel may additionally comprise a propulsion machine allocation device, i.e. a device that is configured to allocate propulsion machines.

The vessel may further comprise a user actuated steering device. In this case it is possible that the vessel operations space is placed as a limitation on the allowed user actuations of the user actuated steering device.

The user actuated steering device may additionally be configured to provide a set of control forces and torques to the propulsion machine allocation device. In this case the vessel operations space may be provided as limitations of these control forces and torques.

The vessel may also or instead comprise a vessel control device. In this case the vessel operations space may be placed as a limitation on forces and torques being applied by the vessel control device in the control of the vessel.

The vessel control device may likewise be configured to provide a set of control forces and torques to the propulsion machine allocation device. In this case the vessel operations space may be provided as limitations of these control forces and torques.

The at least one type of motion may be a motion in the group of yaw, surge, sway, heave, roll and pitch.

The set of feasible forces and torques may be related to three types of motion in three dimensions. They may for instance be related to surge, sway and yaw in the x-,y- and z- dimensions.

There may additionally exist a second set with a second type of allowable motion control signals with values between a minimum and a maximum value.

In this case the calculation of a vector contribution may be a calculation of a vector contribution for each combination of allowable motion control signals of the different types.

The propulsion machines may as an example be thrusters equipped with propellers. In this case the first type of motion control signal may be propeller speed and the second motion control signal may be thruster angle.

The allowable control signals of one propulsion machine and the allowable control signals of a neighbouring propulsion machine may furthermore be selected so that the propulsion machines flushing water onto each other is avoided.

It is additionally possible that a combination of the first set of allowable control signals of the first type and the second set of control signals of the second type of said one propulsion machine and a combination of a first set of allowable control signal of the first type and a second set of allowable control signal of the second type of the neighbouring propulsion machine are selected so that the propulsion machines flushing water onto each other is avoided.

According to one variation of the first aspect, the method further comprises reducing the complexity of the vessel operations space through applying inequalities of a first and second group of equal sized matrices on the vessel operations space.

The vessel may additionally comprise at least one electric power bus for powering the propulsion machines and each electric power bus may have a power limitation.

According to one variation of the first aspect, the method may then comprise calculating, for each propulsion machine, the power required for the vector contribution, reducing, if the power limitation of the electric power bus is lower than the power required by propulsion machines connected to it, the power of these propulsion machines such that the power limitation of the electric power bus is met and reducing the corresponding vector contributions to the set of feasible forces and torques based on the power reduction.

According to a corresponding variation of the second aspect, the feasible force determining device may in this case be operative to calculate, for each propulsion machine, the power required for the vector contribution, reduce, if the power limitation of the electric power bus is lower than the power required by propulsion machines connected to it, the power of these propulsion machines such that the power limitation of the electric power bus is met and reducing the corresponding vector contributions to the set of feasible forces and torques based on the power reduction.

It should be emphasized that the term "comprises/comprising" when used in this specification is taken to specify the presence of stated features, steps or components, but does not preclude the presence or addition of one or more other features, steps, components or groups thereof.

BRIEF DESCRIPTION OF THE DRAWINGS

The invention will now be described in more detail in relation to the enclosed drawings, in which:

fig. 1 schematically shows a first way of realizing a feasible force determining device,
fig. 2 shows a computer program product in the form of a CD ROM with computer program code used to implement the feasible force determining device,
fig. 3 schematically shows a vessel comprising the feasible force determining device as well as a user actuated steering device and a vessel control device,
fig. 4 schematically shows a first variation of a vessel control system comprising the user actuated steering device.
fig. 5 schematically shows a second variation of a vessel control system comprising the vessel control device,
fig. 6 schematically shows a vessel with a centre of gravity and comprising four propulsion machines as well as two electric power buses for supplying power to the propulsion machines,

fig. 7 shows a flow chart of a number of method steps in a first embodiment of a method of determining feasible forces and feasible torque for the vessel being performed for a propulsion machine,

fig. 8 shows a flow chart of a number of further method steps in the first embodiment of the method of determining feasible forces and feasible torque for the vessel being performed for all the propulsion machines,

fig. 9 shows a flow chart of a number of method steps in a second embodiment of a method of determining feasible forces and feasible torque for the vessel being performed for a propulsion machine,

fig. 10 shows a flow chart of a number of method steps in the second embodiment of the method of determining feasible forces and feasible torque for the vessel being performed for all the propulsion machines,

fig. 11 shows feasible forces calculated for each of the propulsion machines, fig. 12 shows the feasible forces and the feasible torques of the propulsion machines in an xy-, xz- and zy-plane, and

fig. 13 schematically shows a vessel operations space that has been calculated for the vessel in the xy-, xz- and zy-plane.

DETAILED DESCRIPTION

In the following description, for purposes of explanation and not limitation, specific details are set forth such as particular architectures, interfaces, techniques, etc. in order to provide a thorough understanding of the invention. However, it will be apparent to those skilled in the art that the invention may be practiced in other embodiments that depart from these specific details. In other instances, detailed descriptions of well-known devices, circuits and methods are omitted so as not to obscure the description of the invention with unnecessary detail.

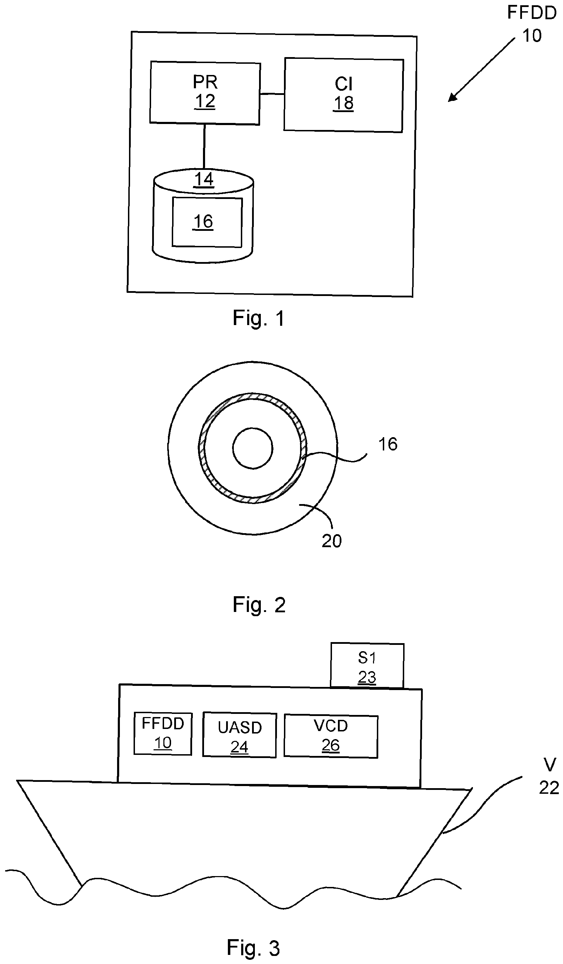

Fig. 1 schematically shows one realization of a feasible force determining device FFDD 10. In the present example, the feasible force determining device 10 comprises a processor PR 12 and a memory or data storage 14 with computer program instructions or computer program code 16 that, when executed by the processor 12, implements a feasible force determining function.

The feasible force determining device 10 may thus comprise a processor 12 with associated program memory 14 including computer program code 16 for implementing the feasible force determining function.

A computer program may also be provided via a computer program product, for instance in the form of a computer readable storage medium or data carrier, like a CD ROM or a memory stick, carrying such a computer program with the computer program code, which will implement the feasible force determining function when being loaded into a processor. One such computer program product in the form of a CD ROM 20 with the above-mentioned computer program code 16 is schematically shown in fig. 2.

The feasible force determining device 10 may with advantage be provided in a vessel.

Fig. 3 schematically shows a vessel V 22 comprising the feasible force determining device FFDD 10. The vessel 22 also comprises a user actuated steering device UASD 24, such as a joystick or a steering wheel, as well as a vessel control device VCD 26, which is a device for controlling the vessel 22, for instance for controlling how it is to move in a body of water. The vessel 22 furthermore comprises at least one sensor S1 23, which sensor 23 measures relevant quantities, such as vessel velocity, and possibly also actual states of control signals.

Both the vessel control device 26 and the user actuated steering device 24 may be used in the control of the vessel 22. The vessel 22 is additionally provided with a group of propulsion machines. As will be seen later, the vessel 22 may additionally comprise a propulsion machine allocation device.

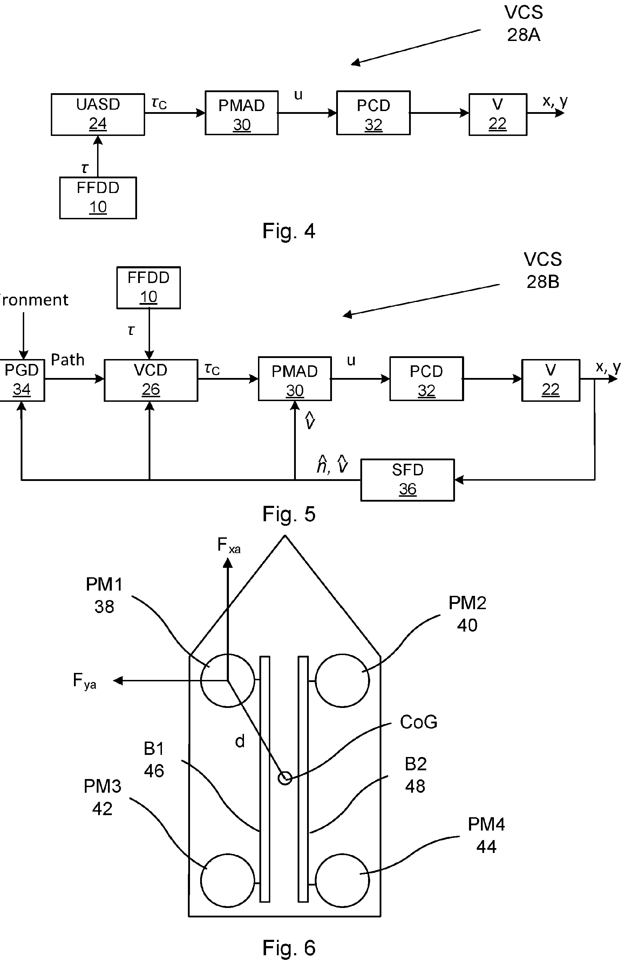

Fig 4 shows a block schematic of a first realization 28A of a vessel control system VCS that employs the user actuated steering device UASD 24. The feasible forces determining device FFDD 10 provides a set of feasible forces and torques $\tau$ to the user actuated steering device 24. These feasible forces and torques $\tau$ provide a limit within which the user actuated steering device 24 can be operated. The user actuated steering device 24 in turn provides a set of forces and torques $\tau_C$ used to control the vessel 22, which set is inside the limits defined by the feasible forces and torques $\tau$. The control forces and torques $\tau_C$ are provided to a propulsion machine allocation device PMAD 30, which allocates propulsion machines based on the set of control forces. It thus determines which propulsion machines are to be used as well as how each of them is to be controlled in order to apply the control forces and torques of the set of control forces on the vessel. Therefore, the propulsion machine allocation device 30 emits a control signal u, which control signal comprises a first contribution . If the propulsion machine is a thruster the first contribution may be propeller speed. It is also possible that the control signal comprises a second contribution, which may be thruster angle in case the propulsion machine is a thruster.

The control signal u is provided to a propulsion control device PCD 32, which controls each propulsion device accordingly and thereby the vessel V 22 is moved in a sideways direction y and forward or backwards direction x.

Fig. 5 shows a block schematic of a second realization 28B of a vessel control system VCS that employs the vessel control device VCD 26.

In this case a path generating device PGD 34 generates path data about a path that the vessel 22 is going to take, which path may be generated based on a desired route for the vessel 22 as well as based on environmental data such as wind direction and speed and water currents. The path is also based on an actual vessel speed $\hat{v}$ as well as on an actual value of a physical property corresponding to the first contribution of the control signal, for instance an actual propeller speed $\hat{n}$. The path data is provided to the vessel control device VCD 26, which also receives the actual vessel speed $\hat{v}$ as well as the actual value of a physical property $\hat{n}$ corresponding to the first contribution of control signal. Furthermore, the vessel control device 26 also receives the set of feasible forces and torques $\tau$ from the feasible force determining device FFDD 10. These feasible forces and torques $\tau$ again provide a limit within which the vessel control device 26 can operate. More particularly, they provide a limitation of the forces and torques that the vessel control function can apply. The vessel control device 26, which as an example may be realized as a model predictive controller (MPC), in turn provides a set of forces and torques $\tau_C$ used to control the vessel 22, which set is inside the limits defined by the feasible forces and torques $\tau$ determined by the feasible force determining device 10.

The control forces and torques $\tau_C$ are provided to a propulsion machine allocation device PMAD 30, which also receives the actual vessel speed $\hat{v}$ and allocates propulsion machines based on the set of control forces $\tau_C$ and actual vessel speed $\hat{v}$. It thus determines which propulsion devices are to be used as well as how each of them is to be controlled in order to apply the control forces and torques of the set of control forces $\tau_C$ on the vessel 22. Therefore, the propulsion machine allocation device 30 emits a control signal u, which control signal u may again comprise the first contribution and optionally also a second contribution to be used by a propulsion device. The control signal u is provided to the propulsion control device PCD 32, which controls each propulsion device to move in the x and y positions.

The position information of the positions x, y is sensed and supplied to a sensor fusion device SFD 36, from which information the sensor fusion device 36 in turn obtains the actual vessel speed $\hat{v}$ and the actual value of the first contribution $\hat{n}$.

It should be realized that the vessel control systems are merely exemplifying in order to describe the usefulness of feasible forces and torques. Consequently, they can be varied in a number of different ways. It is for instance possible to directly detect properties instead of using sensor fusion.

Moreover, the first contribution of the control signal will in the following be referred to as a first type of motion control signal and the second contribution of the control signal will be referred to as a second type of motion control signal, where a motion control signal is a signal that controls the motion of the first vessel. In the examples given here one or two types of control signals are used. However, it should be realized that also more control signals can be used, such as three or four control signals.

Fig. 6 schematically shows the vessel 22. The vessel 22 comprises a group of propulsion machines, which propulsion machines are configured to propel the vessel 22 in a number of directions. In this example it comprises four propulsion machines, which machines are provided in the form of thrusters equipped with propellers, for instance azimuth thrusters. There is a first and a second propulsion machine PM1 38, PM2 40 in the bow of the vessel 22 as well as a third and a fourth propulsion machine PM3 42, PM4 44 in the stern of the vessel 22.

The vessel 22 may also comprises at least one electric power bus for powering the propulsion machines, where each electric power bus may have a power limitation.

In the example of fig. 6, the first and the third propulsion machines 38, 42 are connected to a first electric power bus B1 46, while the second and fourth propulsion machines 40, 44 are connected to a second electric power bus B2 48, which power buses are provided for providing electric power for operating the propulsion machines 38, 40, 42, 44. Furthermore, each propulsion machine 38, 40, 42, 44 can be operated for moving the vessel 22 in a forward or backward direction along an x-axis, which is a surge movement, as well as in a sideways direction along a y-axis, which is a sway movement. Thereby, each propulsion machine 38, 40, 42, 44 may be operated so that it applies a first force in the forward or backward direction on the centre of gravity CoG of the vessel 22 as well as a second force in a sideways direction on the centre of gravity CoG. In fig. 6 one such first and second force $F_{xa}$, $F_{ya}$ for the first propulsion machine 38 are shown at the first propulsion machine 38. Also, the distance d between the first propulsion machine 38 and the centre of gravity CoG is shown. This distance d together with the forces $F_{xa}$, $F_{ya}$ are used for determining a torque applied in relation to a z-axis being perpendicular to both the x and y axes, which torque corresponds to a yaw movement. Similar forces and distances to the centre of gravity CoG are used also for the other propulsion machines. The centre of gravity CoG may additionally form the origin of the x-, y- and z-axes.

It should here be realized that the number as well as the types of propulsion machines used may be varied. It is for instance possible to use tunnel thrusters instead or mere propellers.

Aspects of the present disclosure are directed towards limiting the operation of the vessel to the forces that are feasible. That is, the control applied from a manually actuated steering device or the automatic control applied using a vessel control device is limited.

One such case is the interplay between the vessel control device 26 and the propulsion machine allocation device 30. The propulsion machine allocation may be a rather complex function. It is difficult for the vessel control function to regard the limitations for the propulsion machines. These limitations may be time varying and may also depend on the current vessel operation. Therefore, today rather conservative limits are used by the vessel control function, which may have a negative impact on the vessel performance.

Through applying the feasible forces and torques a more accurate limitation can be used. This allows the provision of a more accurate automatic control. With accurate insight of the feasible sway-force/torque combinations, the constraints can be formulated with less conservatism in the vessel control device, which would lead to an improved performance.

It is believed that the vessel control on all levels will be precise and predictable if the propulsion machine allocation operates with feasible commanded forces and torques.

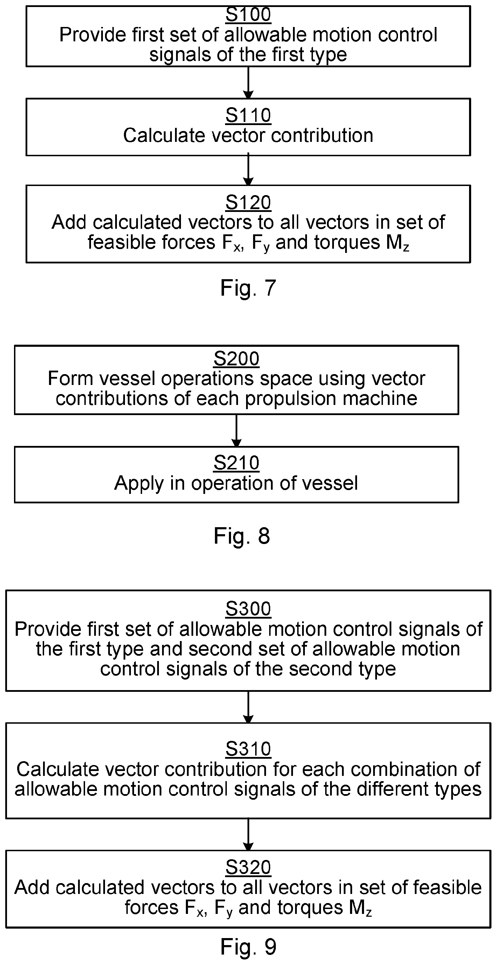

How the feasible forces and torques can be determined and used will now be described with reference also being made to fig. 7 and 8, where fig. 7 shows a flow chart of a number of method steps in a first embodiment of a method of determining feasible forces and feasible torque for the vessel being performed for a propulsion machine and fig. 8 shows a flow chart of a number of method steps in the first embodiment of the method of determining feasible forces and feasible torque for the vessel being performed for the feasible forces and feasible torques of all the propulsion machines.

The method is performed by the feasible force determining function of the feasible force determining device 10.

First the feasible force determining function provides, for each propulsion machine 38, 40, 42, 44, a first set of allowable motion control signals of a first type with values between a minimum and a maximum value, S100. There is thus a first type of motion control signal and the first set of allowable motion control signals therefore comprises allowable motion control signals of the first type. In case the propulsion machines are equipped with propellers, the first type of motion control signal may be propeller speed.

It is additionally possible that the first set of allowable motion control signals of one propulsion machine and the first set of allowable motion control signals of a neighboring propulsion machine are selected so that the propulsion machines flushing water onto each other is avoided.

It is possible that the first and second propulsion machines 38, 40 are not allowed to flush water onto each other. The motion control signals that are not allowed are then the angles for which such flushing occurs. Put differently the motion control signals that are allowed are then the motion control signals for which no such flushing occurs.

It is in this case also possible that a similar limitation exists for the third and the fourth propulsion machines 42, 44. It should additionally be realized that similar control signal limitations may exist for the first and third propulsion machine 38, 42 and the second and fourth propulsion machine 40, 44.

Thereafter the feasible force determining device 10 continues and calculates, for each allowable motion control signal f of each propulsion machine 38, 40, 42, 44, a vector contribution of the propulsion machine to a set $\tau$ of feasible forces and torques applied on the center of gravity CoG of the vessel 22, S110, which set of feasible forces and torques $\tau$ are related to at least one type of motion of the vessel 22. It may for instance be related to a motion in the group of sway, surge, yaw, pitch, roll and hive.

The feasible force determining device 10 may calculate the feasible forces based on the vessel speed and the first type of control signal. It is also possible to consider the vessel heading. If the propulsion machine only provides movement in one direction, such as the x-direction using the first type of control signal, the feasible force determining device may for instance calculate the forces $F_x$ in the backwards and forwards direction x for each allowable control signal value. If instead movement is made along the y-axis, the forces $F_y$ in the sideways direction y for each allowable control signal value of the first type, such as propeller speed, may be calculated. In a similar manner, the force and the distance d to the center of gravity CoG may be used to determine the torque $M_z$ in relation to the z-axis. The feasible force determining device 10 may additionally calculate powers that correspond to the feasible forces and torques, where the power P may be calculated as the torque M times the value of the allowable control signals, such as the torque M times the rotational speed, i.e. the propeller speed. The feasible force determining device may thus calculate, for each propulsion machine, the power required for the vector contribution.

The generalized forces on the center of gravity of CoG a vessel is the sum of forces and torques from each of the propulsion machines.

It is possible that a propulsion machine is not under the control of the propulsion machine allocation function but instead operates with a fixed value of the allowable control signal. In this case, the contribution of this propulsion machine may be calculated using the actually used control signal value.

The feasible force determining function may compare the power limitation of an electrical power bus with the power required by the propulsion machines connected to it. In this case it may more particularly reduce the power of these propulsion machines such that the power limitation of the electric power bus is met and then reduce the corresponding vector contributions to the set of feasible forces and torques based on the power reduction.

Thereby the maximum value of the allowable motion control signal of the first type of a propulsion machine may be reduced if the maximum power for the propulsion machine at this maximum value exceeds the available power for the propulsion machine from the connected electrical power bus. If for instance the maximum power of the first electric power bus 46 is lower than the power required to operate the first propulsion machine 38 at the maximum value of the allowable motion control signal of the first type, the maximum value of this propulsion machine 38 may be lowered to a value that is obtained using the maximum power of the first electric power bus 46.

When the feasible forces and torques have been determined for a propulsion machine, the feasible force determining device 10 adds each calculated vector to all vectors in the set $\tau$ of feasible forces and torques, S120.

This is done for all propulsion machines and thereby the feasible force determining device 10 adds, for each propulsion machine, each calculated vector to all vectors in the set $\tau$ of feasible forces and torques.

It can thereby be seen that there is a set of vectors of feasible forces Fx, Fy and torques Mz made up of the sum of all the vectors determined for all propulsion machines.

The set may additionally have three different subsets, one for the $F_x$-$F_y$ plane, one for the $M_z$-$F_y$ plane, and one for the $F_x$-$M_z$ plane.

The set is then used to form a vessel operations space for the operation of the vessel 22, S200, which operations space is thus based on the set $\tau$ of feasible forces $F_x$, $F_y$ and torques $M_z$, i.e. based on all vector contributions, and provided for at least one type of motion in at least one dimension, such as the, surge motion in the y-dimension.

Thereafter the vessel operations space is applied in the operation of the vessel 22, S210.

The operations space may for instance be used in limiting the control forces supplied to the propulsion machine allocation 30 by the user actuated steering device 24 or the vessel control device 26. The vessel operations space may thus be provided as limitations of the control forces and torques $\tau_C$ supplied by the user actuated steering device 24 or the vessel control device 26 to the propulsion machine allocation device 30. When used with the vessel control device 26, the vessel operations space may thereby be used as a limitation on forces and torques being applied by the vessel control device 26 in the control of the vessel 22. When used with the user actuated steering device 24, the vessel operations space may also be placed as a limitation on the allowed user actuations of the user. It might also be used at any point in the vessel control system 28 where forces are used in the calculations.

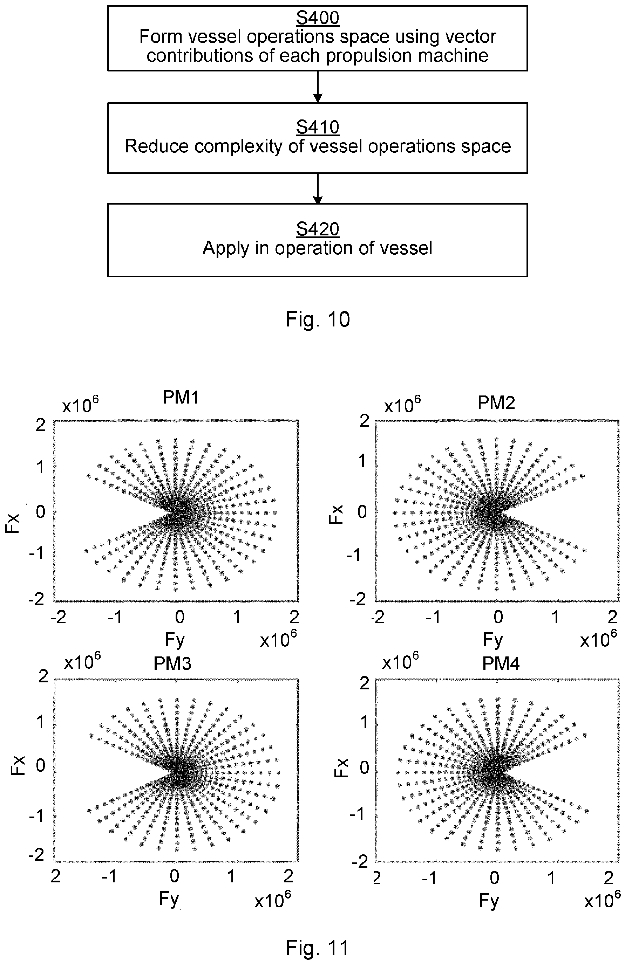

A second embodiment will now be described with reference being made to fig. 9 and 10, where fig. 9 shows a flow chart of a number of method steps in the second embodiment of the method of determining feasible forces and feasible torque for the vessel being performed for a propulsion machine and fig. 10 shows a flow chart of a number of method steps in the second embodiment of the method of determining feasible forces and feasible torque for the vessel being performed for the feasible forces and feasible torques of all the propulsion machines.

First, the feasible force determining function provides, for each propulsion machine 38, 40, 42, 44, a first set of allowable motion control signals of a first type with values between a minimum and a maximum value as well as a second set of allowable motion control signals of a second type with values between a maximum and a minimum value, S300. There is thus a first type of motion control signal and a second type of motion control signal. Therefore, the first set of allowable motion control signals comprises allowable motion control signals of the first type and the second set of allowable motion control signals comprises allowable motion control signals of the second type. In case the propulsion machines comprise propellers that may be angled, the first type of motion control signal may be propeller speed and the second type of motion control signal may be propulsion machine angle.

It is additionally possible that the second set of allowable angles motion control signals of one type of one propulsion machine and the second set of allowable motion control signals of the second type of a neighboring propulsion machine are selected so that the propulsion machines flushing water onto each other is avoided.

If the second type of allowable motion control signal are angles, the angles that are not allowed are then the angles for which such flushing occurs. Put differently the angles that are allowed are then the control signals for which no such flushing occurs.

It is also in this case possible that a similar limitation exists for the third and the fourth propulsion machines 42, 44. It should additionally be realized that similar angle limitations regarding the second type of motion control signal may exist for the first and third propulsion machine 38, 42 and the second and fourth propulsion machine 40, 44.

It is additionally possible that there may be combinations of the allowable motion control signals of the first and second types of a propulsion machine that are not allowed. It is for instance possible that a combination of a first set of allowable control signals of the first type and a second set of of allowable motion control signals of the second type of said one propulsion machine and a combination of a first set of allowable motion control signals of the first type and a second set of allowable motion control signals of the second type of the neighbouring propulsion machine are selected so that the propulsion machines flushing water onto each other is avoided.

If the first type of allowable motion control signals are propeller speeds and the second type of allowable motion control signal are propulsion machine angles, then there may be speed and angle combination of a propulsion machine that is not allowed. It is for instance possible that a combination of a set of allowable angles and propeller speeds of said one propulsion machine and a set of allowable angles and allowable propeller speeds of the neighboring propulsion machine are selected so that the propulsion machines flushing water onto each other is avoided

Thereafter the feasible force determining device 10 continues and calculates, for each combination of allowable motion control signals of the first and second types of each propulsion machine 38, 40, 42, 44, a vector contribution of the propulsion machine to a set $\tau$ of feasible forces and torques applied on the center of gravity CoG of the vessel 22, S310, which set of feasible forces and torques $\tau$ are related to three types of motion of the vessel 22, it may for instance be related to the motions sway, surge and yaw. However, also any of pitch, roll and hive are possible.

The feasible force determining device 10 may calculate the feasible forces based on the vessel speed and the first and second types of motion control signals. It is also possible to consider the vessel heading. The feasible force determining device may for instance calculate the forces Fx in the backwards and forwards direction x for each allowable control signal value of the first and the second type for movement made along the x-axis, the forces Fy in the sideways direction y for each allowable control signal value of the first and second type. If the first type of motion control signal is propeller speed and the second type of motion control signal is propulsion machine angle, the first type of motion control signal may be used to determine the magnitude of a force provided by a propulsion machine, while the second type of motion control signal may be used to determine the direction in the xy-plane. In a similar manner, the force and the distance d to the center of gravity CoG may be used to determine the torque Mz in relation to the z-axis. The feasible force determining device 10 may additionally calculate powers that correspond to the feasible forces and torques, where the power P may be calculated as the torque M times the value of the allowable control signal of the first type. The feasible force determining device may thus calculate, for each propulsion machine, the power required for the vector contribution.

The generalized forces on the centre of gravity of CoG a vessel is the sum of forces and torques from each of the propulsion machines. It is additionally possible that the first set of allowable control signals of one propulsion machine and the first set of allowable control signals allowable angles of a neighboring propulsion machine are selected so that the propulsion machines flushing water onto each other is avoided.

The set is also here used to form a vessel operations space for the operation of the vessel 22, S400, which operations space is based on the set $\tau$ of feasible forces $F_x$, $F_y$ and torques $M_z$ from all propulsion machines, i.e. on all vector contributions, and provided in three dimensions.

There may additionally be a reducing of the complexity of the vessel operations space, S410, which may comprise applying inequalities of a first and second group of equal sized matrices $A_\tau$, $B_\tau$ on the vessel operations space.

There may for instance be one pair of matrices A, B in the first and second group applied in each plane of the vessel operations space.

The vessel operations space can thus be approximated using inequalities expressed by constant size matrices. This may simplify the propulsion machine allocation even more.

This reducing of the complexity may also be described in the following way.

Once there exist a contour for the plane Fx-Fy, this contour may be approximated by the inequality.

$$A \cdot \begin{pmatrix} F_x \\ F_y \end{pmatrix} \leq B \qquad\qquad (1)$$

The procedure is performed also for the $F_x$-$M_z$ plane and for the $F_y$-$M_z$ plane.

Put differently, the feasible generalized forces can be defined as:

$$A_\tau \cdot \tau \leq B_\tau \qquad\qquad (2)$$

where $A_\tau$ and $B_\tau$ are composed by the matrices A and B from the different planes. Further the generalized force vector is $\tau = [F_x \, F_y \, M_z]^T$.

Thereafter the operations space is applied in the operation of the vessel 22 such as in the vessel control. Thereby the inequality $A \cdot \tau \leq B$ is used as an additional constraint in the vessel control device 26.

Fig. 11 - 13 show how the feasible forces and torques may be determined as well as how the vessel operations space may be formed.

Fig. 11 shows an example of the feasible force calculation Fx, Fy being made for the first, second third and fourth propulsion machine 38, 40, 42, 44 at a low vessel speed like 1 m/s. In his case neighboring propulsion machines are not allowed to flush each other which can be seen by the shape of the feasible forces. The dots correspond to a set of angles and propeller speeds.

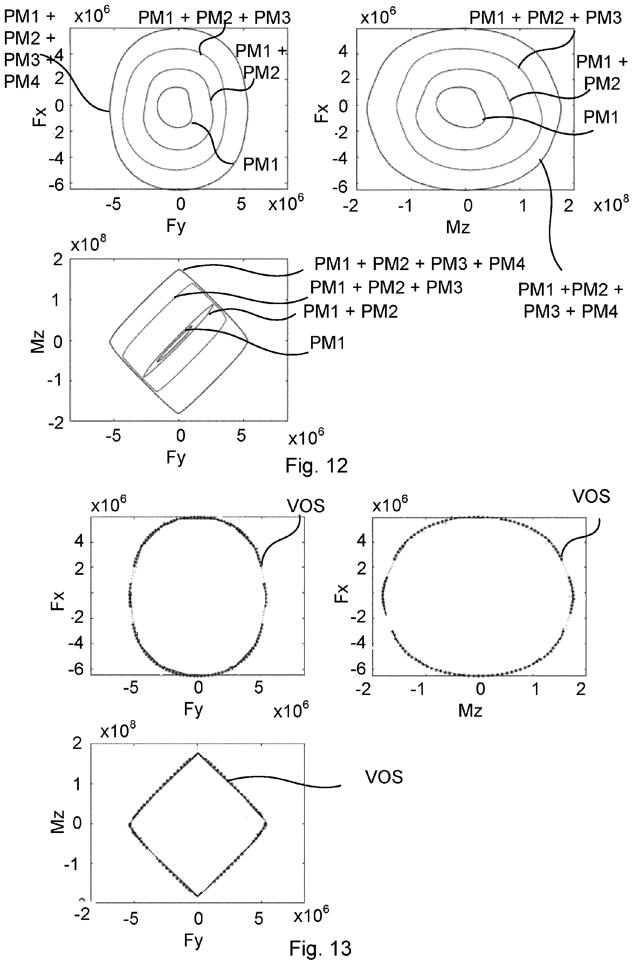

Fig. 12 in turn shows how the total feasible force is successively added from the contributions from the different propulsion machines in each plane $F_y$ - $F_x$, $M_z$ - $F_x$, and $F_y$ - $M_z$ at the same vessel speed. There is one sub-plot for each plane Fy - Fx, Mz - Fx, and Fy - Mz. The inner contour represents the forces and torques from the first propulsion machine 38, the following contour represents the forces and torques from the first and second propulsion machines 38 and 40, the third contour represent the forces and torques from the first, second and third propulsion machine 38, 40, 42 and the outermost contour represents the feasible forces and torques from all four propulsion machines 38, 40, 42, 44.

The forming of a vessel operations space VOS at the same vessel speed is shown in fig. 13. Also here, there is one sub-plot for each plane $F_y$ - $F_x$, $M_z$ - $F_x$, and $F_y$ - $M_z$..

As was mentioned above the power required for a vector contribution from a propulsion machine can be reduced if the power limitation of the electric power bus to which this propulsion machine is connected is lower than the power required by propulsion machine such that the power limitation of the electric power bus is met.

As can be seen in fig. 6, there may be more than one propulsion machine connected to an electric power bus. If there is more than one propulsion machine connected to an electric power bus with limited power, and the power required from that bus exceeds the available power, then the sum of the maximum power of the propulsion machines is lowered to the power limitation of the bus and the maximum levels of the corresponding type of motion control signal lowered accordingly

In the second embodiment, the forces and torques were applied for the sway, surge and yaw movements. It should be realized that they may just as well or instead be applied for any of heave, roll and pitch. Similarly, the forces and torques can be applied for less than three degrees of freedom.

The invention may be varied in a number of ways. Therefore, while the invention has been described in connection with what is presently considered to be most practical and preferred embodiments, it is to be understood that the invention is not to be limited to the disclosed embodiments, but on the contrary, is intended to cover various modifications and equivalent arrangements. Therefore, the invention is only to be limited by the following claims.

**Claims**

1. A method for determining feasible forces and feasible torque for a vessel (22) provided with a group of propulsion machines (38, 40, 42, 44), said propulsion machines being configured to propel the vessel (22) in a number of directions, the method being performed by a feasible force determining device (10) and comprising:

   providing (S100; S300), for each propulsion machine (38. 40, 42, 44), a first set of allowable motion control signals of a first type with values between a minimum and a maximum value,
   calculating (S110; S210), for each allowable of motion control signal of each propulsion machine (38, 40, 42, 44), a vector contribution of the propulsion machine to a set ($\tau$) of feasible forces ($F_x$, $F_y$) and torques ($M_z$) being related to at least one type of motion of the vessel (22),
   add (S120; S320), for each propulsion machine, each calculated vector to all vectors in the set ($\tau$) of feasible forces ($F_x$, $F_y$) and torques ($M_z$),
   forming (S200; S400) a vessel operations space (VOS) for the operation of the vessel (22), which vessel operations space (VOS) is based on the set ($\tau$) of feasible forces ($F_x$, $F_y$) and torques ($M_z$) and provided in at least one dimension, and
   applying (S210; S420) the vessel operations space (VOS) in the operation of the vessel (22).

2. The method as claimed in claim 1, wherein the type of motion is a motion in the group of yaw, surge, sway, heave roll and pitch.

3. The method as claimed in claim 1 or 2, wherein the set of feasible forces and torques are related to three types of motion in three dimensions.

4. The method according to any previous claim, wherein there is a second set of allowable motion control signals of a second type with values between a minimum and a maximum value and where the calculation of a vector contribution is a calculation (S310) of a vector contribution for each combination of allowable motion control signals of the different types.

5. The method according to claim 4, wherein the propulsion machines (38, 40, 42, 44) are thrusters equipped with propellers, the first type of motion control signal is propeller speed and the second type of motion control signal is thruster angle.

6. The method according to any previous claim, wherein the vessel (22) comprises at least one electric power bus (46, 48) for powering the propulsion machines (38, 40, 42, 44) and each electric power bus (46, 48) having a power limitation, the method further comprising calculating, for each propulsion machine, the power required for the vector contribution, reducing, if the power limitation of the electric power bus (46) is lower than the power required by propulsion machines (38, 42) connected to it, the power of these propulsion machines (38, 42) such that the power limitation of the electric power bus (46) is met and reducing the corresponding vector contributions to the set ($\tau$) of feasible forces ($F_x$, $F_y$) and torques ($M_z$) based on the power reduction.

7. The method as claimed in any previous claim, wherein the set of allowable motion control signals of one propulsion machine (38) and the set of allowable motion control signals of a neighboring propulsion machine (40) are selected so that the propulsion machines (38, 40) flushing water onto each other is avoided.

8. A feasible force determining device (10) for determining feasible forces and feasible torque for a vessel (22) provided with a group of propulsion machines (38, 40, 42, 44), said propulsion machines being configured to propel the vessel (22) in a number of directions, the feasibility force determining device (10) comprising a processor (12) operative to:

provide, for each propulsion machine (38, 40, 42, 44), a first set of allowable motion control signals of a first type with values between a minimum and a maximum value,

calculate, for each allowable motion control signal, a vector contribution of the propulsion machine to a set ($\tau$) of feasible forces (Fx, Fy) and torques (Mz) being related to at least one type of motion of the vessel (22),

add, for each propulsion machine, each calculated vector to all vectors in the set ($\tau$) of feasible forces ($F_x$, $F_z$) and torques ($M_z$),

form a vessel operations space (VOS) for the operation of the vessel (22), which vessel operations space (VOS) is based on the set ($\tau$) of feasible forces ($F_x$, $F_y$) and torques ($M_z$) and provided in at least one dimension, and apply the vessel operations space (VOS) in the operation of the vessel (22).

9. The feasible force determining device (10) as claimed in claim 8, wherein the type of motion is a motion in the group of yaw, surge, sway, heave roll and pitch.

10. The feasible force determining device (10) according to claim 8 or 9, wherein there is a second set of allowable motion control signals of a second type with values between a minimum and a maximum value and where the processor when being operative to calculate a vector contribution is operative to calculate a vector contribution for each combination of allowable motion control signals of the different types.

11. The feasible force determining device (10) according to claim 10, wherein the propulsion machines (38, 40, 42, 44) are thrusters equipped with propellers, the first type of motion control signal is propeller speed and the second type of motion control signal is thruster angle.

12. The feasible force determining device (10) according to any of claims 8 - 11, wherein the vessel (22) comprises at least one electric power bus (46, 48) for powering the propulsion machines (38, 40, 42, 44), each electric power bus (46, 48) having a power limitation and the processor (12) being further operative to calculate, for each propulsion machine (38, 40, 42, 44), the power required for the vector contribution, to reduce, if the power limitation of the electric power bus (46) is lower than the power required by propulsion machines (38, 42) connected to it, the power of these propulsion machines (38, 42) such that the power limitation of the electric power bus (46) is met and to reduce the corresponding vector contributions to the set ($\tau$) of feasible forces ($F_x$, $F_y$) and torques ($M_z$) based on the power reduction.

13. A vessel (22) comprising the feasible force determining device (10) according to any of claims 8 - 12.

14. The vessel (22) according to claim 13, further comprising a user actuated steering device (24), wherein the vessel operations space (VOS) is placed as a limitation on the allowed user actuations of the user actuated steering device (24).

15. The vessel (22) according to claim 13 or 14, further comprising a vessel control device (26), wherein the vessel operations space (VOS) is placed as a limitation on forces and torques being applied by the vessel control device (26) in the control of the vessel (22).

FFDD
10

Fig. 1

Fig. 2

Fig. 3

VCS
28A

UASD
24    $\tau_C$    PMAD
30    u    PCD
32    V
22    x, y

$\tau$

FFDD
10

Fig. 4

VCS
28B

FFDD
10

ronment

$\tau$

PGD
34    Path    VCD
26    $\tau_C$    PMAD
30    u    PCD
32    V
22    x, y

$\hat{v}$

$\hat{n}, \hat{v}$    SFD
36

Fig. 5

$F_{xa}$

PM1
38

PM2
40

$F_{ya}$

CoG

d

B1
46

B2
48

PM3
42

PM4
44

Fig. 6

**S100**
Provide first set of allowable motion control signals of the first type

↓

**S110**
Calculate vector contribution

↓

**S120**
Add calculated vectors to all vectors in set of feasible forces $F_x$, $F_y$ and torques $M_z$

Fig. 7

**S200**
Form vessel operations space using vector contributions of each propulsion machine

↓

**S210**
Apply in operation of vessel

Fig. 8

**S300**
Provide first set of allowable motion control signals of the first type and second set of allowable motion control signals of the second type

↓

**S310**
Calculate vector contribution for each combination of allowable motion control signals of the different types

↓

**S320**
Add calculated vectors to all vectors in set of feasible forces $F_x$, $F_y$ and torques $M_z$

Fig. 9

```
┌─────────────────────────────────────────┐
│                 S400                      │
│ Form vessel operations space using vector │
│  contributions of each propulsion machine │
└─────────────────────────────────────────┘
                    │
                    ▼
┌─────────────────────────────────────────┐
│                 S410                      │
│  Reduce complexity of vessel operations   │
│                 space                     │
└─────────────────────────────────────────┘
                    │
                    ▼
┌─────────────────────────────────────────┐
│                 S420                      │
│         Apply in operation of vessel      │
└─────────────────────────────────────────┘
```

Fig. 10

Fig. 11

Fig. 12

Fig. 13

Europäisches
Patentamt

European
Patent Office

Office européen
des brevets

# EUROPEAN SEARCH REPORT

**Application Number**

EP 23 16 4764

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/074483 A1 (WAERTSILAE FINLAND OY [FI]) 22 April 2021 (2021-04-22) | 1-5, 7-11, 13-15 | INV. B63B79/40 B63H5/125 |
| Y | * figures 1,6 * <br> * paragraph [0095] * <br> * paragraph [0206] - paragraph [0211] * | 6,12 | B63H21/21 B63H25/42 G05D1/08 G05F1/10 |
| Y | WO 2013/164392 A1 (KONGSBERG MARITIME AS [NO]) 7 November 2013 (2013-11-07) <br> * claims 3,4; figures * | 6,12 | H02J3/14 G05B13/02 |
| X | JP 2001 219899 A (HITACHI SHIPBUILDING ENG CO) 14 August 2001 (2001-08-14) <br> * paragraph [0031]; figure 1 * | 1,8 | |
| X | WO 2017/102028 A1 (ABB SCHWEIZ AG [CH]) 22 June 2017 (2017-06-22) <br> * claims 1-4; figure 1 * | 1,8 | |
| X | CN 103 823 372 A (NO 702 RES INST CHINA CSIC) 28 May 2014 (2014-05-28) <br> * claims 1,2 * | 1,8 | **TECHNICAL FIELDS SEARCHED (IPC)** |
| X | WO 2013/139609 A1 (KONGSBERG MARITIME AS [NO]) 26 September 2013 (2013-09-26) <br> * claims 1-6; figures * | 1,6,8,12 | B63B G05D H02J G05F B63H G05B |

The present search report has been drawn up for all claims

| Place of search | Date of completion of the search | Examiner |
|---|---|---|
| The Hague | 13 September 2023 | Schmitter, Thierry |

## ANNEX TO THE EUROPEAN SEARCH REPORT
## ON EUROPEAN PATENT APPLICATION NO.

EP 23 16 4764

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2023

| Patent document cited in search report | | | Publication date | Patent family member(s) | | Publication date |
|---|---|---|---|---|---|---|
| WO 2021074483 | A1 | | 22-04-2021 | EP | 4045394 A1 | 24-08-2022 |
| | | | | WO | 2021074483 A1 | 22-04-2021 |
| WO 2013164392 | A1 | | 07-11-2013 | CN | 104350659 A | 11-02-2015 |
| | | | | DK | 2856599 T3 | 17-08-2020 |
| | | | | EP | 2856599 A1 | 08-04-2015 |
| | | | | ES | 2813951 T3 | 25-03-2021 |
| | | | | KR | 20150004421 A | 12-01-2015 |
| | | | | NO | 334364 B1 | 17-02-2014 |
| | | | | US | 2015051746 A1 | 19-02-2015 |
| | | | | WO | 2013164392 A1 | 07-11-2013 |
| JP 2001219899 | A | | 14-08-2001 | JP | 4570192 B2 | 27-10-2010 |
| | | | | JP | 2001219899 A | 14-08-2001 |
| WO 2017102028 | A1 | | 22-06-2017 | CN | 108431712 A | 21-08-2018 |
| | | | | EP | 3391165 A1 | 24-10-2018 |
| | | | | US | 2018364718 A1 | 20-12-2018 |
| | | | | WO | 2017102028 A1 | 22-06-2017 |
| CN 103823372 | A | | 28-05-2014 | NONE | | |
| WO 2013139609 | A1 | | 26-09-2013 | CN | 104254811 A | 31-12-2014 |
| | | | | DK | 2828718 T3 | 18-01-2021 |
| | | | | EP | 2828718 A1 | 28-01-2015 |
| | | | | ES | 2854324 T3 | 21-09-2021 |
| | | | | KR | 20140137006 A | 01-12-2014 |
| | | | | NO | 334245 B1 | 20-01-2014 |
| | | | | US | 2015032306 A1 | 29-01-2015 |
| | | | | WO | 2013139609 A1 | 26-09-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Nonlinear MPC for Motion Control and Thruster Allocation of Ships. **ALEXANDER BÄRLUND.** Master Thesis. Linköping University, Department of Electrical Engineering, Automation Control, 2019